# EUROPÄISCHE PATENTSCHRIFT

(11) **EP 2 897 257 B1**
(45) Veröffentlichungstag und Bekanntmachung des Hinweises auf die Patenterteilung: **16.10.2019**
(21) Anmeldenummer: 14003813.4
(22) Anmeldetag: 12.11.2014
(51) Int. Cl.: H02K 5/10, F04B 49/06, H02K 5/12

(54) **Elektrische Maschine für ein Fahrzeug, insbesondere für ein Nutzfahrzeug, und Verfahren zum Schutz gegen eindringendes Wasser**
Electric machine for a vehicle, in particular for a commercial vehicle, and method for protection against penetrating water
Machine électrique pour un véhicule, en particulier pour un véhicule utilitaire, et procédé destiné à la protection contre la pénétration d'eau

(30) Priorität: 16.01.2014 DE 102014000364
(43) Veröffentlichungstag der Anmeldung: 22.07.2015
(73) Patentinhaber: MAN Truck & Bus SE, 80995 München (DE)
(72) Erfinder: Dietmair, Andreas, 86169 Augsburg (DE); Harres, Ulrich, 90441 Nürnberg (DE)
(74) Vertreter: Liebl, Thomas

(56) Entgegenhaltungen:
- FR-A1- 2 886 781
- GB-A- 2 444 296
- US-A- 1 719 407
- US-A- 4 119 873
- G. Rome and J. Casey: "The ABC's of 'P' Type Motors", , 1. August 1979 (1979-08-01), XP002758516, Gefunden im Internet: URL:http://patricioconcha.ubb.cl/abc_motor es_y_generadores/16%20files%20357mb/A012_P Type.pdf [gefunden am 2016-06-07]
- J. Stallcup and W.G. Lawrence: "Basics of Purging and Pressurizing Systems", Ecmweb , 1. Dezember 2000 (2000-12-01), XP002758517, Gefunden im Internet: URL:http://ecmweb.com/code-basics/basics-p urging-and-pressurizing-systems [gefunden am 2016-06-08]
- Robert Schoblick,: "Antriebe von Elektroautos in der Praxis Motoren Batterietechnik Leistungstechnik", 2013, Franzis Verlag * page 16 * * page 251 *

## Beschreibung

Die Erfindung betrifft ein Fahrzeug mit einer elektrischen Maschine, gemäß dem Oberbegriff des Patentanspruchs 1 sowie ein Verfahren zur Verbesserung des Schutzes gegen eindringendes Wasser für Einreichungen einer elektrischen Maschine gemäß dem Patentanspruch 7.

Elektrische Maschinen, die in Fahrzeugen, insbesondere in Nutzfahrzeugen eingebaut sind, können spritzwassergeschützt ausgeführt sein. Je nach Einsatzbereich des jeweiligen Fahrzeugs können Generatoren oder andere in Fahrzeugen verbaute elektrische Maschinen nicht nur Spritzwasser ausgesetzt sein, sondern teilweise oder vollständig von Wasser umgeben sein, so dass insbesondere empfindliche elektrische Einrichtungen der jeweiligen elektrischen Maschine beeinträchtigt oder sogar funktionsuntüchtig werden können. Dringt beispielsweise im Bereich der Schleifkontakte des Kollektors einer elektrischen Maschine Wasser ein, so kann der elektrische Kontakt zwischen Schleifkontakten und Schleifringen zeitweise oder auch vollständig unterbrochen werden, so dass dann die Funktion nicht mehr gegeben ist. Das eindringende Wasser kann an den entsprechenden Einrichtungen außerdem Korrosionsschäden hervorrufen.

FR-A1-2886781 offenbart ein Fahrzeug mit einer elektrischen Maschine nach dem Oberbegriff des Anspruchs 1.

Der Erfindung liegt die Aufgabe zugrunde, eine elektrische Maschine so weiterzubilden, dass wasserempfindliche Einrichtungen der elektrischen Maschine vor eindringendem Wasser möglichst gut geschützt werden können und/oder deren Funktion auch unter Wasser gegeben ist.

Die Lösung dieser Aufgabe erhält man mit den Merkmalen des Patentanspruchs 1. Besonders vorteilhafte Weiterbildungen der erfindungsgemäßen elektrischen Maschine sind in den Unteransprüchen 2 bis 6 offenbart.

Gemäß dem kennzeichnenden Teil des Patentanspruchs 1 ist wenigstens eine im Gehäuse der elektrischen Maschine befindliche Einrichtung in wenigstens einem Druckraum angeordnet, der vorzugsweise zeitweise über einen Druckluftanschluss mit einem gegenüber dem Umgebungsdruck des die elektrische Maschine umgebenden Mediums erhöhten Überdruck beaufschlagt wird. Durch den im Druckraum aufgebauten Überdruck wird erreicht, dass die darin einliegende Einrichtung vor eindringendem Wasser geschützt wird. In einem derartigen Druckraum können die elektronischen Elemente eines Umrichters, eines Kollektors oder sonstige elektronische Bauteile angeordnet sein. Besonders vorteilhaft ist es, in einem derartigen Druckraum die auf der Rotorwelle angeordneten Schleifringe und die an den Schleifringen anliegenden Schleifkontakte in einem solchen Druckraum anzuordnen, da dieser Bereich im Hinblick auf eindringendes Wasser besonders problematisch ist.

Der jeweilige Druckraum kann zur Druckbeaufschlagung an einen ohnehin in einem Kraftfahrzeug vorhandenen Druckluftspeicher angeschlossen sein. Es besteht aber auch die Möglichkeit, den Druckraum an einen Kompressor oder erfindungsgemäß an der Überdruckseite eines Ansaugtrakts eines Verbrennungsmotors anzuschließen. Die Druckluftversorgung für den Druckraum erfordert somit keine zusätzlichen Einrichtungen, da hierfür ohnehin vorhandene Einrichtungen eines Kraftfahrzeugs verwendet werden können.

Bei der bevorzugten Ausführung einer elektrischen Maschine muss der Druckraum oder müssen die Druckräume nicht ständig unter Druck stehen. Es kann vielmehr auch eine Steuereinheit vorgesehen sein, die die Druckluftzufuhr zum jeweiligen Druckraum in Abhängigkeit von Umgebungsparametern oder anderen Parametern steuert. Beispielsweise kann ein Wassersensor das Eintauchen der elektrische Maschine erkennen, so dass daraufhin die Steuereinheit eine Druckbeaufschlagung der jeweiligen Druckräume auslöst. Durch die Steuerung der Druckbeaufschlagung in Abhängigkeit von Umgebungsparametern oder sonstigen Parametern wird gezielt das Eindringen von Wasser an wasserempfindlichen Einrichtungen der elektrischen Maschine vermieden, ohne dass ein ständiger Überdruck in den jeweiligen Druckräumen aufrechterhalten werden muss. Es kann aber auch die Möglichkeit bestehen, die Druckbeaufschlagung manuell auszulösen.

An einen Druckraum könnte, als Beispiel, direkt an einen Druckluftanschluss eine Druckluftversorgungsleitung angeschlossen sein. Es könnten, als Beispiel, an der elektrischen Maschine aber auch Druckluftkanäle angeordnet sein, die zu einem oder mehreren Druckräumen führen und über einen gemeinsamen Druckluftanschluss mit einem externen Druckluftspeicher verbunden werden können. Die in der elektrischen Maschine angeordneten Druckluftkanäle ermöglichen es, dass die Druckluftzufuhr unabhängig von der örtlichen Position des jeweiligen Druckraums an einem entfernt vom Druckraum befindlichen Druckluftanschluss erfolgen kann.

Besonders vorteilhaft kann es sein, an jedem Druckraum wenigstens eine Austrittsöffnung mit einem geringen Öffnungsquerschnitt anzuordnen, wobei der Öffnungsquerschnitt so gewählt ist, dass im Druckraum ein geeigneter Überdruck, beispielsweise, mit dem vorhandenen Druckspeicher oder mit anderen vorhandenen Druckerzeugern aufgebaut werden kann. Die Austrittsöffnung hat den Vorteil, dass der Druckraum eine definierte Belüftung hat, wodurch eventuell vorhandene Feuchtigkeit aus dem Druckraum abgeführt werden kann. Befindet sich die Austrittsöffnung in einem unteren Ablaufbereich des Druckraums, so kann aus der Austrittsöffnung auch selbsttätig Wasser abfließen.

Die erfindungsgemäße elektrische Maschine ist bevorzugt in einem für Wassereinsätze geeigneten Nutzfahrzeug angeordnet, deren Druckraum oder Druckräume über eine Steuereinheit an einen im Nutzfahrzeug vorhandenen Druckluftspeicher oder Drucklufterzeuger angeschlossen ist. Das Nutzfahrzeug kann beispielsweise ein Amphibienfahrzeug oder ein Bergungsfahrzeug, welches in Überschwemmungsgebieten zum Einsatz kommt, sein.

Der Erfindung liegt die weitere Aufgabe zugrunde, ein Verfahren zur Verbesserung des Schutzes gegen eindringendes Wasser für Einrichtungen von elektrischen Maschinen anzugeben.

Die Lösung dieser weiteren Aufgabe wird mit den Merkmalen des Patentanspruchs 7 erhalten. Gemäß dem Patentanspruch 7 wird ein Druckraum, in dem die vor Wasser zu schützenden Einrichtungen einliegen, wenigstens zeitweise mit Druck beaufschlagt. Die Druckbeaufschlagung erfolgt dabei vorzugsweise in Abhängigkeit von Umgebungsparametern oder anderen Betriebsparametern der elektrischen Maschine und/oder des jeweiligen Fahrzeugs, in dem die elektrische Maschine angeordnet ist. Als Parameter können Feuchtigkeitsdaten von Sensoren oder Daten eines globalen Positionierungssystems herangezogen werden. Es kann aber beispielsweise bei jedem Start und/oder jedem Anhalten des Fahrzeugs eine Druckbeaufschlagung erfolgen, um durch eine damit verbundene Belüftungsfunktion eine Feuchtigkeitsentfernung in dem Druckraum zu erreichen. Auch eine manuelle Aktivierung ist alternativ oder gegebenenfalls auch zusätzlich möglich.

Auch das Betätigen der Bremsen des Fahrzeugs kann als Bremsparameter zur Druckluftbeaufschlagung herangezogen werden, wobei dann über einen gewissen Zeitraum die Druckbeaufschlagung beibehalten werden kann. Es kann aber auch die Fahrzeuggeschwindigkeit als Parameter herangezogen werden, um beispielsweise bei höheren Fahrgeschwindigkeiten die Druckbeaufschlagung abzustellen. Dabei wird davon ausgegangen, dass bei höheren Fahrgeschwindigkeiten ein Wassereinsatz nicht stattfindet.

Nachfolgend wird die Erfindung anhand von Ausführungsbeispielen, die in der Zeichnung dargestellt sind, näher erläutert.

Es zeigen:
- Fig. 1: ein Blockschaltbild von Einrichtungen zur Beaufschlagung von an einer elektrischen Maschine vorgesehenen Druckräumen und
- Fig. 2: eine Teilansicht einer elektrischen Maschine im Längsschnitt im Bereich eines Druckraums, der auf einer Rotorwelle angeordnete Schleifringe umgibt.

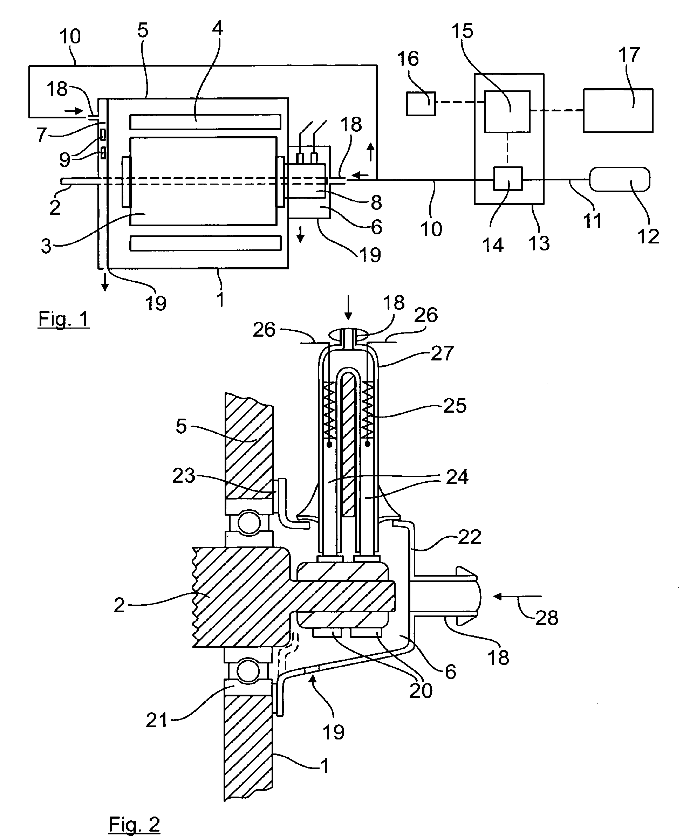

Das Blockschaltbild von Figur 1 zeigt schematisch dargestellt eine elektrische Maschine 1 mit einem auf einer Welle 2 drehbar gelagerten Rotor 3 und einem den Rotor 3 umgebenden Stator 4. Im Gehäuse 5 der elektrischen Maschine 1 sind zwei Druckräume 6, 7 ausgebildet, in denen nur andeutungsweise dargestellte Einrichtungen 8, 9 einliegen.

Beide Druckräume 6, 7 sind über Druckleitungen 10, 11 an einen Druckluftspeicher 12 angeschlossen. Zwischen den Druckleitungen 10 und 11 befindet sich eine Steuereinheit 13 mit einem Stellglied 14 und einem Prozessor 15, der das Stellglied 14 in Abhängigkeit von Sensordaten eines Wassersensors 16 und in Abhängigkeit von weiteren Parametern einer Motorsteuerung 17 steuert. Die Motorsteuerung 17 kann beispielsweise dem Prozessor 15 Geschwindigkeitsdaten des Fahrzeugs, in welchem die gesamte in Figur 1 dargestellte Einrichtung zusammen mit der elektrischen Maschine 1 angeordnet ist, übermitteln. Die Motorsteuerung 17 kann auch GPS-Daten (Positionsdaten) als Betriebsparameter des Fahrzeugs an den Prozessor 15 übermitteln. Anhand sämtlicher erhaltenen Betriebsparameter und Umgebungsparameter veranlasst der Prozessor 15 eine Betätigung des Stellglieds 14, um zeitweise die Druckräume 6 und 7 mit Druck aus dem Druckluftspeicher 12 zu beaufschlagen. Dabei werden die Druckräume 6, 7 mit einem solchen Überdruck beaufschlagt, dass in den Druckräumen 6, 7 ein höherer Druck herrscht als der Umgebungsdruck. Dies ist insbesondere dann wichtig, wenn die elektrische Maschine 1 vollständig in Wasser eintaucht, um dabei sicherzustellen, dass in die Druckräume 6, 7 kein Wasser eindringen kann.

Der Druckraum 6 beinhaltet die vor Wasser zu schützende Einrichtung 8, die im Wesentlichen Schleifringe und Schleifkontakte umfasst, wie diese in Figur 2 detaillierter dargestellt sind. Im Druckraum 7 kann zum Beispiel als eine vor Wasser zu schützende Einrichtung 9 ein Umrichter mit seinen elektronischen Bauteilen angeordnet sein, zum Beispiel können in Verbindung mit Generatoren Diodengleichrichter vorgesehen sein.

Beide Druckräume 6, 7 besitzen einen Druckluftanschluss 18, an dem jeweils eine Druckleitung 10 angeschlossen ist. Außerdem besitzen beide Druckräume 6, 7 im unteren Bereich vorgesehene Austrittsöffnungen 19, aus denen entsprechend den dort eingezeichneten, nach unten gerichteten Pfeilen Druckluft und auch Wasser abgeleitet werden kann.

In der vergrößerten Teilansicht von Figur 2 ist der in Figur 1 nur andeutungsweise dargestellte Druckraum 6 detaillierter dargestellt. Im Druckraum 6 ragt das eine Ende der Welle 2 des Rotors 3 hinein, auf dem Schleifringe 20 angeordnet sind. Die Welle 2 ist mittels eines Kugellagers 21 im Gehäuse 5 der elektrischen Maschine 1 drehbar gelagert. Im Bereich des Druckraums 6 ist das Gehäuse 5 als Abdeckkappe 22 ausgebildet, die gegenüber dem übrigen Gehäuse 5 mittels eines Dichtungsrings 23 abgedichtet ist. An der Abdeckkappe 22 ist außerdem der Druckluftanschluss 18 in Form eines Anschlussstutzens angeformt.

Im oberen Bereich des Druckraums 6 befinden sich Schleifkontakte 24, die mittels Druckfedern 25 gegen die Schleifringe 20 gedrückt werden. Von den Schleifkontakten 24 sind elektrische Leitungen 26 aus dem nach oben erweiterten Gehäuseteil 27 der Abdeckkappe 22 herausgeführt. An dem nach oben ausgerichteten Gehäuseteil 27 ist ebenfalls ein Druckluftanschluss 18 angeordnet, über den entsprechend der dort angegebenen Pfeilrichtung Druckluft in den Druckraum 6 eingespeist werden kann. Auch an dem nach rechts von der Abdeckkappe 22 abragenden Druckluftanschluss 18 wird entsprechend dem dort dargestellten Richtungspfeil 28 Druckluft in den Druckraum 6 eingespeist, so dass im Druckraum 6 ein entsprechender Überdruck entsteht.

Im unteren Bereich des Druckraums 6 ist die auch in Figur 1 dargestellte Austrittsöffnung 19 angeordnet, deren Querschnitt so gewählt ist, dass mittels der Druckluftzufuhr an den Druckluftanschlüssen 18 ein Überdruck im Druckraum 6 aufgebaut werden kann. Die Austrittsöffnung 19 hat eine Belüftungsfunktion und auch eine Wasserableitungsfunktion, falls beispielsweise bei abgeschalteten Betrieb Wasser in den Druckraum 6 eindringen sollte.

Es wird angemerkt, dass die im dargestellten Ausführungsbeispiel von Figur 2 ersichtlichen Schleifkontakte 24 als stabförmige Kohlen ausgebildet sind. Anstelle der Schleifringe 20 kann auch ein Kollektor auf der Welle 2 des Rotors angeordnet sein, der mit anderen Schleifkontaktelementen als den hier dargestellten Schleifkontakten 24, zusammenwirkt, um die erforderliche elektrische Verbindung zur Rotorwicklung des Rotors herzustellen.

Die erfindungsgemäße Druckbeaufschlagung im Bereich von Einrichtungen, die gegen eindringendes Wasser geschützt werden sollen, kann auch bei bürstenlosen elektrischen Maschinen und generell auch bei sonstigen elektrischen Einheiten oder anderen vor Wasser zu schützenden Einrichtungen angewendet werden.

### Bezugszeichenliste

- 1: elektrische Maschine
- 2: Welle
- 3: Rotor
- 4: Stator
- 5: Gehäuse
- 6,7: Druckraum
- 8,9: Einrichtung
- 10, 11: Druckleitungen
- 12: Druckluftspeicher
- 13: Steuereinheit
- 14: Stellglied
- 15: Prozessor
- 16: Wassersensor
- 17: Motorsteuerung
- 18: Druckluftanschluss
- 19: Austrittsöffnung
- 20: Schleifringe
- 21: Kugellager
- 22: Abdeckkappe
- 23: Dichtungsring
- 24: Schleifkontakte

## Patentansprüche

1. Fahrzeug mit einer elektrischen Maschine, die einen auf einer Welle (2) drehbar gelagerten Rotor (3) und einen den Rotor (3) umgebenden Stator (4) aufweist, wobei wenigstens eine Einrichtung (8, 9) der elektrischen Maschine (1) in wenigstens einem Druckraum (6, 7) der elektrischen Maschine (1) einliegt, **dadurch gekennzeichnet, dass** der wenigstens eine Druckraum (6, 7) über einen Druckluftanschluss (18) mit Druckluft von einem Ansaugtrakt eines Verbrennungsmotors beaufschlagbar ist, und dass eine Steuereinheit (13) vorgesehen ist, die die Druckluftzufuhr zum Druckraum (6, 7) in Abhängigkeit von Umgebungsparametern und/oder anderen Parametern steuert.

2. Fahrzeug nach Anspruch 1, **dadurch gekennzeichnet, dass** auf der Welle (2) angeordnete Schleifringe (20) und an den Schleifringen (20) anliegende Schleifkontakte (24) in dem Druckraum (6) einliegen.

3. Fahrzeug nach einem der vorhergehenden Ansprüche, **dadurch gekennzeichnet, dass** an der elektrischen Maschine (1) wenigstens ein Druckluftkanal angeordnet ist, der von einem Druckluftanschluss (18) zu wenigstens einem Druckraum (6, 7) führt.

4. Fahrzeug nach einem der vorhergehenden Ansprüche, **dadurch gekennzeichnet, dass** der Druckraum (6, 7) wenigstens eine Austrittsöffnung (19) mit einem kleinen Öffnungsquerschnitt hat.

5. Fahrzeug nach Anspruch 4, **dadurch gekennzeichnet, dass** die Austrittsöffnung (19) als Wasserablauföffnung und als Luftablassöffnung dient.

6. Fahrzeug nach einem der vorhergehenden Ansprüche, **dadurch gekennzeichnet, dass** die elektrische Maschine (1) in einem für Wassereinsätze geeigneten Nutzfahrzeug angeordnet ist, wobei die elektrische Maschine (1) den Druckraum (6, 7) hat, der über die Steuereinheit (13) an einen im Nutzfahrzeug vorhandenen Druckluftspeicher (12) oder Drucklufterzeuger angeschlossen ist.

7. Verfahren zur Verbesserung des Schutzes gegen eindringendes Wasser für Einrichtungen (8, 9) einer elektrischen Maschine (1), die in einem Fahrzeug, insbesondere in einem Nutzfahrzeug, eingesetzt ist, wobei die elektrische Maschine (1) einen auf einer Welle (2) drehbar gelagerten Rotor (3) und einen den Rotor (3) umgebenden Stator aufweist, wobei ein Druckraum (6, 7) der elektrischen Maschine (1), in dem eine vor Wasser zu schützende Einrichtung (8, 9) der elektrischen Maschine (1) einliegt, wenigstens zeitweise mit Druckluft beaufschlagt wird, wobei der Druckraum (6, 7) über einen Druckluftanschluss (18) mit Druckluft von einem Ansaugtrakt eines Verbrennungsmotors des Fahrzeugs beaufschlagt wird, und wobei der Druckraum (6, 7) in Abhängigkeit von Umgebungsparametern und/oder anderen Parametern der elektrischen Maschine und/oder des Fahrzeugs mit Druckluft beaufschlagt wird.

8. Verfahren nach Anspruch 7, **dadurch gekennzeichnet, dass** der Druckraum (6, 7) beim Abschalten des Antriebsmotors des Fahrzeugs mit Druckluft beaufschlagt wird.

9. Verfahren nach Anspruch 7 oder 8, **dadurch gekennzeichnet, dass** mittels eines von Hand betätigbaren Schaltelements eine Druckluftbeaufschlagung des Druckraums (6, 7) für einen vorgegebenen Zeitraum ausgelöst wird.

10. Verfahren nach einem der Ansprüche 7 bis 9, **dadurch gekennzeichnet, dass** Daten eines Wassersensors (16) und/oder Positionierungsdaten und/oder weitere Parameter zur Auslösung einer Druckluftbeaufschlagung des Druckraums (6, 7) ausgewertet werden.

## Claims

1. Vehicle having an electric machine, which has a rotor (3) rotatably mounted on a shaft (2) and a stator (4) surrounding the rotor (3), at least one device (8, 9) of the electric machine (1) lying in at least one pressure chamber (6, 7) of the electric machine (1), **characterized in that** the at least one pressure chamber (6, 7) can be pressurized via a compressed air connection (18) with compressed airfrom an intake tract of an internal combustion engine, and **in that** a control unit (13) is provided, which controls the compressed air supply to the pressure chamber (6, 7) as a function of environmental parameters and/or other parameters.

2. Vehicle according to Claim 1, **characterized in that** slip rings (20) arranged on the shaft (2) and wiping contacts (24) resting on the slip rings (20) lie in the pressure chamber (6).

3. Vehicle according to one of the preceding claims, **characterized in that** at least one compressed air channel, which leads from a compressed air connection (18) to at least one pressure chamber (6, 7), is arranged on the electric machine (1).

4. Vehicle according to one of the preceding claims, **characterized in that** the pressure chamber (6, 7) has at least one outlet opening (19) with a small opening cross section.

5. Vehicle according to Claim 4, **characterized in that** the outlet opening (19) serves as a water discharge opening and as an air exhaust opening.

6. Vehicle according to one of the preceding claims, **characterized in that** the electric machine (1) is arranged in a utility vehicle suitable for water uses, wherein the electric machine (1) has the pressure chamber (6, 7), which is connected via the control unit (13) to a compressed air reservoir (12) or compressed air generator present in the utility vehicle.

7. Method for improving protection against penetrating water for devices (8,9) of an electric machine (1) which is used in a vehicle, in particular in a utility vehicle, wherein the electric machine (1) has a rotor (3) rotatably mounted on a shaft (2) and a stator surrounding the rotor (3), wherein a pressure chamber (6, 7) of the electric machine (1), in which a device (8, 9) of the electric machine (1) that is to be protected against water lies, is at least temporarily pressurized with compressed air, wherein the pressure chamber (6, 7) is pressurized via a compressed air connection (18) with compressed air from an intake tract of an internal combustion engine of the vehicle, and wherein the pressure chamber (6, 7) is pressurized with compressed air as a function of environmental parameters and/or other parameters of the electric machine and/or of the vehicle.

8. Method according to Claim 7, **characterized in that** the pressure chamber (6 7) is pressurized with compressed air as the drive engine of the vehicle is switched off.

9. Method according to Claim 7 or 8, **characterized in that** compressed air pressurization of the pressure chamber (6, 7) for a predetermined time period is triggered by means of a switching element that can be actuated by hand.

10. Method according to one of Claims 7 to 9, **characterized in that** data from a water sensor (16) and/or positioning data and/or further parameters are evaluated in order to trigger compressed air pressurization of the pressure chamber (6, 7).

## Revendications

1. Véhicule équipé d'une machine électrique qui comporte un rotor (3) monté à rotation sur un arbre (2) et un stator (4) entourant le rotor (3), au moins un dispositif (8, 9) de la machine électrique (1) étant logé dans au moins une chambre sous pression (6, 7) de la machine électrique (1), **caractérisé en ce que** l'au moins une chambre sous pression (6, 7) peut être soumise, par le biais d'un raccord d'air comprimé (18), à de l'air comprimé provenant d'un conduit d'admission d'un moteur à combustion interne, et **en ce qu'**une unité de commande (13) est prévue qui commande l'alimentation de la chambre sous pression (6, 7) en air comprimé en fonction de paramètres environnementaux et/ou d'autres paramètres.

2. Véhicule selon la revendication 1, **caractérisé en ce que** des bagues collectrices (20) disposées sur l'arbre (2) et des contacts glissants (24) en appui sur les bagues collectrices (20) sont logés dans la chambre sous pression (6).

3. Véhicule selon l'une des revendications précédentes, **caractérisé en ce qu'**au moins un conduit d'air comprimé, allant d'un raccord d'air comprimé (18) à au moins une chambre sous pression (6, 7), est disposé au niveau de la machine électrique (1).

4. Véhicule selon l'une des revendications précédentes, **caractérisé en ce que** la chambre sous pression (6, 7) comporte au moins une ouverture de sortie (19) dont la section d'ouverture transversale est petite.

5. Véhicule selon la revendication 4, **caractérisé en ce que** l'ouverture de sortie (19) sert d'ouverture de sortie d'eau et d'ouverture de sortie d'air.

6. Véhicule selon l'une des revendications précédentes, **caractérisé en ce que** la machine électrique (1) est disposée dans un véhicule utilitaire adapté à des applications hydrauliques, la machine électrique (1) comportant la chambre sous pression (6, 7) qui est raccordée par le biais de l'unité de commande (13) à un accumulateur d'air comprimé (12) ou à un générateur d'air comprimé présent dans le véhicule utilitaire.

7. Procédé d'amélioration de la protection de dispositifs (8, 9) d'une machine électrique (1) utilisée dans un véhicule, en particulier un véhicule utilitaire, contre l'entrée d'eau, la machine électrique (1) comportant un rotor (3) monté à rotation sur un arbre (2) et un stator entourant le rotor (3), une chambre sous pression (6, 7) de la machine électrique (1), dans laquelle est logé un dispositif (8, 9) de la machine électrique (1) qui est destiné à être protégé de l'eau, étant soumise au moins temporairement à de l'air comprimé, la chambre de pression (6, 7) étant soumise par le biais d'un raccord d'air comprimé (18) à de l'air comprimé provenant d'un conduit d'admission d'un moteur à combustion interne du véhicule, et la chambre sous pression (6, 7) étant soumise à de l'air comprimé en fonction de paramètres environnementaux et/ou d'autres paramètres de la machine électrique et/ou du véhicule.

8. Procédé selon la revendication 7, **caractérisé en ce que** la chambre sous pression (6, 7) est soumise à de l'air comprimé lorsque le moteur d'entraînement du véhicule est arrêté.

9. Procédé selon la revendication 7 ou 8, **caractérisé en ce qu'**un processus visant à soumettre la chambre sous pression (6, 7) à de l'air comprimé est déclenché pendant une durée prédéterminée au moyen d'un élément de commutation pouvant être actionné manuellement.

10. Procédé selon l'une des revendications 7 à 9, **caractérisé en ce que** des données d'un capteur d'eau (16) et/ou des données de positionnement et/ou d'autres paramètres sont évalués pour déclencher le processus visant à soumettre la chambre de pression (6, 7) à de l'air comprimé.
